# EUROPÄISCHE PATENTANMELDUNG

(11) **EP 1 195 311 A1**
(43) Veröffentlichungstag der Anmeldung: **10.04.2002**
(21) Anmeldenummer: 01120195.1
(22) Anmeldetag: 22.08.2001
(51) Int. Cl.: B61L 15/02, F21S 8/00, H05B 33/08

(54) **Signalleuchte für ein Schienenfahrzeug**

(30) Priorität: 04.09.2000 DE 10043718
(71) Anmelder: SIEMENS AKTIENGESELLSCHAFT, 80333 München (DE)
(72) Erfinder: Becker, Christian, 91096 Möhrendorf (DE)

(57) **Zusammenfassung**

Die Erfindung betrifft eine Signalleuchte für ein Schienenfahrzeug, insbesondere für eine Lokomotive. Es ist vorgesehen, dass mehrere Leuchtdioden in einer Signalleuchte vorgesehen sind.

## Beschreibung

Die Erfindung betrifft eine Signalleuchte für ein Schienenfahrzeug, insbesondere für eine Lokomotive.

Schienenfahrzeuge, insbesondere Lokomotiven, sind vorne und hinten mit Signalleuchten ausgestattet, damit das Fahrzeug bei schlechter Sicht oder Dunkelheit zu erkennen ist. Abhängig von der Fahrtrichtung ist es erforderlich, dass eine solche Signalleuchte weißes oder rotes Licht abgibt. Darüber hinaus kann bei manchen Bahngesellschaften eine Sonderfahrt rotes oder sogar grünes Licht erfordern.

Bisher war es üblich, die Signalleuchten mit Glühlampen auszustatten und rotes oder auch grünes Licht dadurch zu erzeugen, dass eine entsprechend gefärbte Glasscheibe vor die Glühlampe geschoben wurde.

Glühlampen haben eine relativ kurze Lebensdauer, so dass regelmäßige Wartungen notwendig sind. Zu diesem Zweck ist sogar eine Glühfadenüberwachung üblich. Bei einigen Bahngesellschaften (z.B. SNCF) ist eine Fahrberechtigung von der Funktion der Signalleuchten abhängig. Eine Lokomotive mit nicht funktionsfähigen Signalleuchten darf nicht eingesetzt werden.

Der Erfindung liegt die Aufgabe zugrunde, eine Signalleuchte für ein Schienenfahrzeug anzugeben, die keine oder nur geringe Wartung bedarf und über einen langen Zeitraum zuverlässig funktioniert. Insbesondere soll die Signalleuchte in einfacher Weise Licht verschiedener Farben, insbesondere weiß, rot und grün, aussenden können.

Die Aufgabe wird gemäß der Erfindung dadurch gelöst, dass mehrere Leuchtdioden (LED) vorhanden sind.

Damit wird der Vorteil erzielt, dass man weitgehend ohne Wartungsarbeiten auskommt. Insbesondere entfällt die aufwendige Glühfadenüberwachung. Die Lebensdauer üblicher Leuchtdioden ist, ähnlich wie die übliche Betriebszeit einer Lokomotive, ca. 35 Jahre, so dass ein Austausch von Leuchtdioden in der Regel nicht erforderlich ist. Darüber hinaus wird der Vorteil erzielt, dass wegen der großen Anzahl Leuchtdioden in einer Signalleuchte die Leuchte, selbst falls einige Leuchtdioden ausfallen, funktionsfähig bleibt.

Beispielsweise sind mindestens zwei Gruppen von Leuchtdioden vorhanden, wobei diese Gruppen getrennt ein- und ausschaltbar sind. Damit wird der Vorteil erzielt, dass verschiedene Lichtstärken in einfacher Weise realisiert werden können. Dabei sind Farbänderungen des Lichtes ausgeschlossen, die beim Abblenden einer Glühlampe durch einen Widerstand auftreten können.

Beispielsweise sind in einer Signalleuchte Leuchtdioden für verschiedene Farben vorhanden, die getrennt nach Farbe ein-und ausschaltbar sind. Es ist dann nicht erforderlich, dass weißes Licht durch farbige Gläser gefärbt wird. Folglich ist ausgeschlossen, dass das weiße Licht durch in der Signalleuchte bereit gehaltene gefärbte Gläser beeinflusst wird.

Beispielsweise sind für jede Farbe mindestens zwei Gruppen von Leuchtdioden vorhanden, wobei diese Gruppen getrennt ein-und ausschaltbar sind. Vorteilhafterweise kann dadurch für jede Farbe eine unterschiedliche Lichtstärke eingestellt werden.

Die Farben sind beispielsweise weiß und rot, wodurch das übliche Spitzensignallicht oder das Schlusslicht realisiert werden können.

Beispielsweise sind die Farben weiß, rot und grün, da manche Bahngesellschaften (z.B. FS) auch grüne Signalleuchten fordern.

Beispielsweise sind die Leuchtdioden verschiedener Farbe über einen Schalter ein- und ausschaltbar, der verschiedene Signalbilder, die aus mehreren Signalleuchten gebildet sind, schaltet.

Im Führerraum angeordnet kann dieser Schalter, der insbesondere ein Drehschalter ist, mit Piktogrammen versehen sein.

Ein Signalbild besteht meistens aus drei Signalleuchten, von denen jede ausgeschaltet sein kann oder weißes oder farbiges Licht abgibt.

Beispielsweise sind die Leuchtdioden zeitverzögert einschaltbar. Damit wird der Vorteil erzielt, dass bei Verwendung eines Drehschalters nur das wirklich ausgewählte Signalbild und nicht beim Drehen des Schalters nur kurz kontaktierte Signalbilder eingeschaltet wird. Eine geeignete Zeitverzögerung ist z.B. 2 sec.

Für manche Bahngesellschaften (z.B. SNCF) kann auch ein Blinken der Leuchtdioden vorgesehen sein. Das Einschalten des Blinklichtbetriebes kann bei einer Schnellbremsung eines Zuges automatisch ausgelöst werden.

Beispielsweise sind die Leuchtdioden um eine Aussparung für einen Scheinwerfer herum angeordnet. Dieser Scheinwerfer kann für das Abblendlicht geeignet sein. Ein Fernlichtscheinwerfer kann dann separat montiert sein.

Beispielsweise ist der in der Aussparung angeordnete Scheinwerfer ein Linsenscheinwerfer, der z.B. mit einer Halogenglühlampe ausgerüstet ist.

Es wird der Vorteil erzielt, dass der Scheinwerfer für Abblendlicht und die Signalleuchte räumlich kombiniert sind.

Mit der Erfindung wird insbesondere der Vorteil erzielt, dass die Signalleuchte weitgehend wartungsfrei arbeitet und trotzdem eine Lichtstärke bis zu 700 cd liefern kann.

## Patentansprüche

1. Signalleuchte für ein Schienenfahrzeug, insbesondere für eine Lokomotive,
**dadurch gekennzeichnet, dass** mehrere Leuchtdioden vorhanden sind.

2. Signalleuchte nach Anspruch 1,
**dadurch gekennzeichnet, dass** mindestens zwei Gruppen von Leuchtdioden vorhanden sind und dass die Gruppen getrennt ein- und ausschaltbar sind.

3. Signalleuchte nach einem der Ansprüche 1 oder 2,
**dadurch gekennzeichnet, dass** Leuchtdioden für verschiedene Farben vorhanden sind, die getrennt nach Farbe ein- und ausschaltbar sind.

4. Signalleuchte nach Anspruch 3,
**dadurch gekennzeichnet, dass** für jede Farbe mindestens zwei Gruppen von Leuchtdioden vorhanden sind und dass die Gruppen getrennt ein- und ausschaltbar sind.

5. Signalleuchte nach einem der Ansprüche 3 oder 4,
**dadurch gekennzeichnet, dass** die Farben weiß und rot sind.

6. Signalleuchte nach einem der Ansprüche 3 oder 4,
**dadurch gekennzeichnet, dass** die Farben weiß, rot und grün sind.

7. Signalleuchte nach einem der Ansprüche 3 bis 6,
**dadurch gekennzeichnet, dass** die Leuchtdioden verschiedener Farbe über einen Schalter, der verschiedene Signalbilder auswählt, ein- und ausschaltbar sind.

8. Signalleuchte nach Anspruch 7,
**dadurch gekennzeichnet, dass** die Leuchtdioden zeitverzögert einschaltbar sind.

9. Signalleuchte nach einem der Ansprüche 1 bis 8,
**dadurch gekennzeichnet, dass** die Leuchtdioden um eine Aussparung für einen Scheinwerfer herum angeordnet sind.

10. Signalleuchte nach Anspruch 9,
**dadurch gekennzeichnet, dass** der Scheinwerfer ein Linsenscheinwerfer ist.
